# EUROPEAN PATENT SPECIFICATION

(11) **EP 3 515 106 B1**
(45) Date of publication and mention of the grant of the patent: **06.04.2022**
(21) Application number: 19153150.8
(22) Date of filing: 22.01.2019
(51) Int. Cl.: H04W 24/08, H04W 36/08, H04W 36/14, H04W 36/24, H04W 36/30, H04W 48/18, H04W 88/06, H04W 76/15

(54) **INTELLIGENT MODEL FOR DYNAMICALLY SELECTING BEST TRANSMISSION CHANNEL**
INTELLIGENTES MODELL ZUR DYNAMISCHEN AUSWAHL DES BESTEN ÜBERTRAGUNGSKANALS
MODÈLE INTELLIGENT DE SÉLECTION DYNAMIQUE DU MEILLEUR CANAL DE TRANSMISSION

(30) Priority: 22.01.2018 US 201815876425
(43) Date of publication of application: 24.07.2019
(73) Proprietor: VERIFONE, INC., San Jose, CA 95134 (US)
(72) Inventor: HAJIMUSA, Imran A., San Jose, California 95120 (US)
(74) Representative: DREISS Patentanwälte PartG mbB

(56) References cited:
- US-A1- 2014 313 882
- US-A1- 2015 373 574
- US-A1- 2017 048 789

## Description

The present disclosure relates generally to the monitoring of communications channels to identify the fastest path to use. Specifically, various embodiments relate to determining whether a certain channel's network connection meets desired response times for conducting a transaction, and if not, comparing the speeds of other available channels' network connections, and if required, automatically switching to a faster channel to ensure the fastest connection for transactions.

Typically, devices that rely upon wireless networks, such as POS terminals using cellular networks for transaction processing, suffer from either a loss in connectivity or slow connectivity due to network loading or not being connected to the most efficient (e.g., fastest) network. Indeed, peak connectivity issues have been reported to cause significant problems at major retailers to complete transactions. This results in dissatisfaction for consumers because the transaction processing speed is inefficient and causes increased waiting times for customers. Dissatisfied consumers usually take their business elsewhere, resulting in loss of revenue.

These and other deficiencies exist. A problem to be solved by the invention is to increase the speed of a transaction process involving a point of sale terminal in a cellular network.

The problem is solved by a point of sale terminal according to claim 1 and a method according to claim 6. Further embodiments are set forth in the dependent claims.

Embodiments and advantages will become apparent from the following detailed description, taken in conjunction with the accompanying drawings, illustrating by way of example the principles of the various exemplary embodiments.

For a more complete understanding of the present invention, the objects and advantages thereof, reference is now made to the following descriptions taken in connection with the accompanying drawings in which:
Figure 1 depicts a system according to exemplary embodiments.
Figure 2 depicts a method according to exemplary embodiments.
Figure 3 depicts a flow chart according to exemplary embodiments.

The following description provides different configurations and features according to exemplary embodiments. While certain nomenclature and types of applications and hardware are described, other names and application/hardware usage are possible and the nomenclature provided is done so by way of non-limiting examples. Further, while particular embodiments are described, it should be appreciated that the features and functions of each embodiment may be combined in any combination as is within the capability of one of ordinary skill in the art. The figures provide additional exemplary details regarding the present invention. It should also be appreciated that these exemplary embodiments are provided as non-limiting examples only.

Various exemplary methods are provided by way of example herein. These methods are exemplary as there are a variety of ways to carry out methods according to the present disclosure. The methods depicted and described can be executed or otherwise performed by one or a combination of various systems and modules. Each block shown in the methods represents one or more processes, decisions, methods or subroutines carried out in the exemplary method, and these processes, decisions, methods or subroutines are not necessarily carried out in the specific order outlined in the methods, nor is each of them required.

Exemplary embodiments include methods and systems to monitor and intelligently adopt a communication path (e.g., a channel) to deliver the fastest possible data path and response time from among available network connections. The term "channel" may be used herein to denote a connection path to/from a network for data exchange. Exemplary embodiments make use of data intelligence and predictive analytics to select and optimize the data path to gain the maximum speed on dynamic basis.

The various embodiments are configured to monitor channel transaction speeds and to identify the fastest communications path to use to ensure a high speed data channel to conduct transactions. For example, the embodiments may determine whether a certain channel's connection meets desired transaction response times. This information can be used to dynamically and automatically switch the data or communications channel being used to another data or communications channel to ensure a speedy data connection.

By way of non-limiting example, a transaction may be originated from a POS terminal using a cellular network connection (i.e., a channel). The time of completion for the transaction may be determined and recorded by the POS terminal. The time of completion may be measured from receipt of the payment information from a customer (e.g., swiping or tapping of the payment method at the POS terminal) to until the authorization for the transaction is returned from the payment network. This channel transaction speed monitoring may occur during each transaction conducted at the POS terminal. The channel transaction speed (i.e., the time of completion of the transaction) may be compared to a threshold number (i.e., a threshold time for completion of the transaction. This time may be predetermined). If the transaction speed is in excess of the threshold (i.e., the transaction time is longer than the threshold time for completion of the transaction), the POS terminal may evaluate historical transaction speed data from other available channels it can access to provide a network connection. The POS terminal may determine and store the historical channel transaction speed data from other available channels based on previous transactions transacted over those channels by the POS terminal, transaction speed data for other channels provided to the POS terminal from a central server, or by monitoring the transaction speeds of alternate channel connections by sending a ping (e.g., conducting a $0 dollar, or test, transaction). Any other method of determining the transaction speeds of available channels may be employed. If an alternate, available channel has better performance than the current channel (i.e., its transaction speed is faster than the threshold or faster than the transaction speed of the current channel), the POS terminal may switch or transition to using the alternate, available channel instead of the current channel. In some instances, a transition to another available channel may occur even if its transaction speed is slower than the threshold. This might occur, for example, if all available channels' transaction speeds are slower than the threshold, but one of the channels is faster than the others.

Alternatively, the POS terminal may actively monitor the transaction speeds of all, or a subset of, available cellular networks (i.e., available channels). The monitoring may be performed by maintaining historical data of transactions conducted over the available channels and pinging each available channel to determine the transaction speed of each. In this manner, the POS terminal may monitor the channel speed periodically using test transactions, apart from actual transactions, and identify the fastest channel. The POS terminal may also receive data from a central server that indicates the speed of each available channel. The central server may ping available channels and determine the speed of each. Alternatively, the central server may collect data on transaction speed conducted by the POS terminal on each available channel. Other methods of determining the transaction speed of available channels might also be employed. If a faster channel is available (i.e., a connection with faster transaction speeds than the current channel being utilized to conduct transactions), the POS terminal may automatically switch to using the faster channel. The POS terminal may continuously monitor transaction speed of available channels and ensure it is using the fastest connection. Once identified, that channel may be used for transactions conducted before a new determination is made. Thus, the transaction may be completed using the fastest channel.

Exemplary embodiments may include two modes: single ended and dual ended. In the single ended mode, an intelligent client may be installed at the POS terminal side. The intelligent client may be implemented as software. Transactions at the POS terminal are monitored by the client, creating a continuous tracking of the various transactions (e.g., debit, credit, limit, acquirer, brand, bank, etc. ) to build a model that consists of parameters such as, but not limited to, average, mean, and best transaction speeds for transactions. Depending on the thresholds set, the client software may automatically trigger a switch of the current channel to another channel to provide the fastest speed. The switch can be triggered once transaction speeds are slower than the threshold. The switch may be to a faster channel based on the model data. In various embodiments, the intelligent client can trigger pings during idle cycles to constantly monitor the health of the current channel and available channels to collect the statistics vital for intelligent decision making regarding the fastest available channel.

In an alternative single ended mode, an intelligent client may be installed at the gateway or server side. The intelligent client may be implemented as software. Transactions conducted by each POS terminal communicatively coupled to the gateway are monitored by the client, creating a continuous tracking of the various transactions (e.g., debit network, credit, limit, acquirer, brand, bank, etc. ) to build a model that consists of parameters such as average, mean, and best transaction speeds for each channel used by each POS terminal. The client may trigger a switch, at the POS terminal, of the current channel being used to another channel to provide the fastest speed. The switch can be triggered once the speed information on the channel being used by the POS terminal is slower than the threshold. The switch may be to a faster channel based on the model data. In various embodiments, the intelligent client can trigger pings during idle cycles to constantly monitor the health of the current channel or channels to collect the statistics vital for intelligent decision making regarding the fastest available channel for each POS terminal it serves.

In the dual ended mode, a client may reside at both the terminal side and on the gateway or server side. The gateway may be a payment network gateway to which multiple POS terminal connect to conduct transactions. The server client may monitor and record the transaction speed for each of the multiple connected POS terminals for each available channel used by the POS terminal. Thus, the gateway client can monitor data relating to a particular POS terminal and also has the data for all the transactions carried out by each connected POS terminal. In various embodiments, through an API, each POS terminal and the gateway are able to exchange the data related to optimizing the transaction speeds and adopt to the best possible channel in a proactive fashion. This exchanged data is put into the model at the POS terminal and can be used for channel selection decision making based on channel transaction speed. For example, the gateway client can provide each POS terminal client with data on transaction speeds for each available channel, enabling the client at the POS terminal to evaluate transaction speeds on each available channel based on a larger data set (i.e., the data collected by the POS terminal and the data collected by the gateway). According to exemplary embodiments, the POS terminal controls the switching of channels.

The use of the term "POS terminal" is meant to be exemplary and non-limiting. For example, the POS terminal according to exemplary embodiments may be any type of POS device, including PIN pads, electronic cash registers, Automated Teller Machines (ATMs), card payment terminals, card readers/controllers, and the like, as well as unattended POS devices, such as petrol kiosks. The POS terminal may rely upon cellular networks or data channels for sending and receiving data to complete a transaction. Further, the cellular network according to exemplary embodiments may use any type of wireless data transmission protocol. For example, the cellular network may use protocols such as WIFI, 3G, 4G, GSM, and CDMA. Further, it should be appreciated that the use of the term "channel," "transmission channel," or "transmission" is meant to be non-limiting and may represent communication paths that are either simplex or duplex in nature.

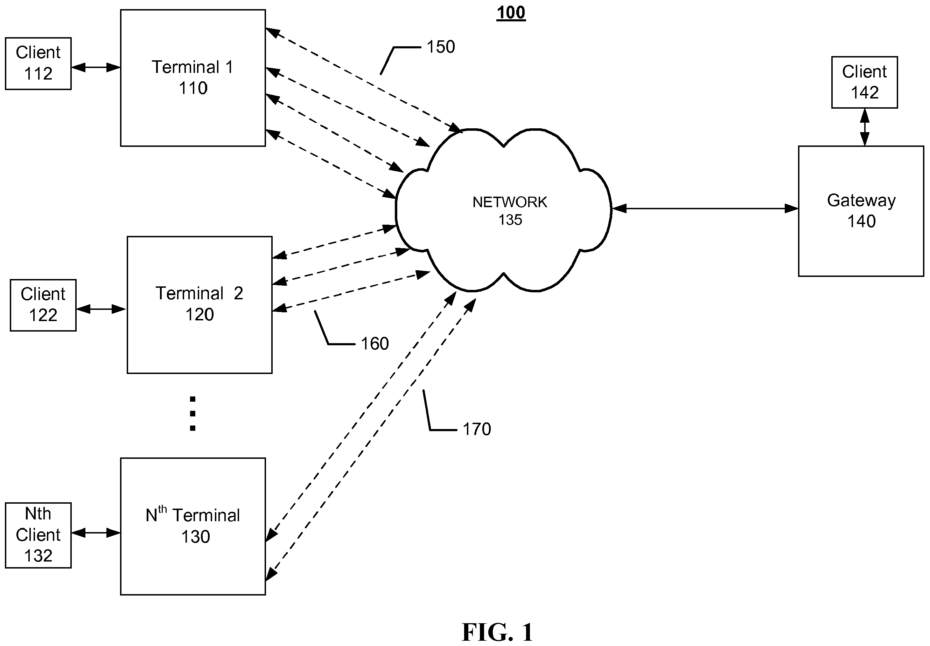

Referring to Figure 1, a schematic diagram of a system 100 is shown, according to an exemplary embodiment. The system 100 of Figure 1 may be implemented in a variety of ways. Architecture within system 100 may be implemented as hardware components (e.g., modules) within one or more network elements. It should also be appreciated that architecture within system 100 may be implemented in computer executable software (e.g., on a tangible, non-transitory computer-readable medium) located within one or more network elements. Module functionality of architecture within system 100 may be located on a single device or distributed across a plurality of devices including one or more centralized servers and one or more mobile units or end user devices. The architecture depicted in system 100 is meant to be exemplary and non-limiting. For example, while connections and relationships between the elements of system 100 is depicted, it should be appreciated that other connections and relationships are possible. The system 100 described below may be used to implement the various methods herein, by way of example. Various elements of the system 100 may be referenced in explaining the exemplary methods described herein.

The system 100 may have a first terminal 110, a second terminal 120, and a Nth terminal 130. These terminals (i.e., 110, 120 and 130) may be communicatively coupled via one or more communication paths 150, 160, and 170 to a network 135. According to exemplary embodiments, each terminal 110, 120, and 130 may be a POS terminal.

According to exemplary embodiments, the network 135 may be the Internet. In various embodiments, the network 135 may be a non-public network, such as a local area network. In other embodiments, the network 135 may be a combination of networks.

Each terminal 110, 120, and 130 may be communicatively coupled to the network 135 via one or more channels, or network connections, 150, 160 and 170. For example, terminal 110 could have four different channels 150; device 120 could have three different channels 160, and Nth device 130 could have two channels 170. It should be appreciated that these examples are meant to be exemplary and each terminal 110, 120, and 130 may have more or less channels than depicted in Figure 1. Each channel may represent a data transmission (and receipt) path from (and to) the terminal. According to the claimed invention, the channels 150, 160, and 170 are cellular networks. For example, the four data exchange paths depicted at 150 may represent four different cellular networks, each providing a data channel to the network 135, which may be operated by different cellular providers and may operate under the same or different network protocols (e.g., such as GSM, 3G, CDMA, or LTE). In various embodiments, different combinations of channels and networks are possible.

A gateway 140 may be communicatively coupled to the network 135. The gateway 140 may be a payment network gateway. For example, the gateway 140 may be a payment gateway that facilitates a payment transaction from a POS terminal (such as 110, 120, and 130) by the transfer of information between the terminal and the front end processor or acquiring bank.

Each terminal 110, 120, and 130 may have a client associated therewith (i.e., clients 112, 122, and 132). The gateway 140 may have a client 142 associated therewith. The client 142 may be used in a dual ended configuration as described herein. The client 142 may communicate with the clients 112, 122, and 132.

In various embodiments, only the terminals 110, 120, and 130 may have a client associated therewith and the gateway 140 may not have a client. This may be the single ended configuration described herein. Alternatively, as described above, the gateway may have a client associated therewith in the single ended configuration.

According to exemplary embodiments, each device client (e.g., clients 112, 122, and 132) may be an intelligent client that monitors transactions conducted using the various data exchanges paths (e.g., one or more of the channels 150, 160, and 170). The device client may be implemented as software. In various embodiments, the device client may be hardware. In other embodiments, the client may be a combination of hardware and software. The client monitors the speed of transactions from the POS terminal on the current channel. For example, the time for completion of a transaction from presentment (e.g., insertion, swipe, or tapping) of a customer's payment card or payment device until the transaction approval is received by the client may be measured by the client and stored by the client. In this way, through monitoring, the client can build a model that consists of various transaction speed information for each channel. For example, the model may track average, mean, and best speeds on each path for transactions conducted. The model may also track data channel quality (i.e., signal strength and/or quality).

The client may be configured with a threshold time or speed for transactions. When the transaction speed exceeds this threshold time, the client may search for a faster channel amongst the channels available to the terminal. The faster channel may be determined by an analysis of the stored model information of transaction times. Once a faster channel is determined, the client may cause the terminal to switch to the faster channel. For example, the client may cause the terminal's communication controller to switch to the faster channel. Thus, the client provides management of the terminal's data communication path.

The monitoring and determination of channel transaction speed may be done continuously while the terminal is in operation. In various embodiments, when the transaction speed threshold is exceeded, the client may cause the terminal to ping the other available channels to determine the speed of the available channels. For example, the client may cause a $0 dollar, or test, transaction to be initiated and measure the speed on each available channel. In other embodiments, such as the dual ended embodiment, the gateway, from its client, may provide speed information on the various available channels based on data collected from the POS terminal, or in some embodiments, all of the terminals to which the gateway is connected. The gateway (i.e., the gateway's client) may provide channel information (e.g., transaction speed) to each terminal client at periodic intervals or the terminal client may query the gateway client for channel transaction speed information. This provided information may be integrated into the terminal client's model of transaction speed and used in determination of channel speed.

In some embodiments, the client may reside at the gateway. The gateway may monitor the transaction speed information on each available channel. The gateway client may determine the fastest available channel and cause the POS terminal to switch channels.

According to various embodiments, the client may monitor channel transaction speed at predetermined intervals or during certain environment conditions, apart from actual transactions. This monitoring may be done in addition to the monitoring of actual transaction time. For example, the client may trigger pings (e.g., test transactions) during idle cycles to constantly monitor the speed of the current channel and the other available channels to collect the statistics (e.g., speed information) as data for decision making. Through this monitoring, the client can build a model that consists of various speed information. For example, the model may track average, mean, and best speeds on each path. The model may also track data channel quality (i.e., signal strength and/or quality). If the ping data on the current channel indicates that the transaction time exceeds a threshold, then the client may automatically trigger a switch of the channel to one that provides the fastest speed. Additionally or alternatively, the switch may occur once a determination is made that a faster transmission path is available. In various embodiments, the switch may be independent of any transaction or other data exchange event triggered by the device or the server.

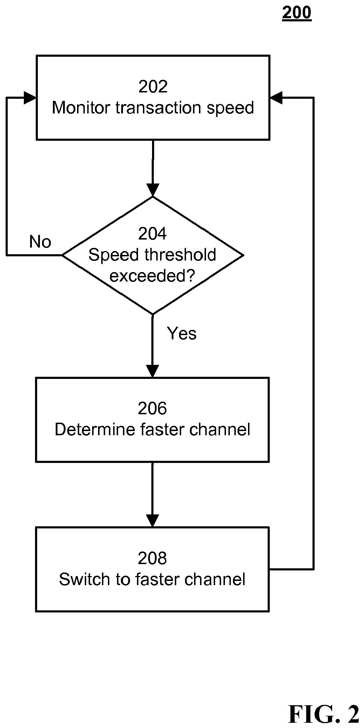

Figure 2 depicts a method according to exemplary embodiments for dynamically selecting a best data transmission channel.

At block 202, transaction speed is monitored at a POS terminal by an installed client. The transaction speed may be monitored for each transaction conducted by the POS terminal. According to exemplary embodiments, the transaction may be conducted over a cellular network (i.e., a channel) to connect to a payment gateway or server through a data network (e.g., the Internet).

At block 204, a determination whether a speed threshold is exceeded is made. If the speed threshold is not exceeded, then the current channel is continued to be used and the method returns to block 202 and transaction speed is continued to be monitored.

At block 206, if the speed threshold is exceeded, a faster channel is determined. The faster channel may be determined as described above based on historical transaction speed information, based on a ping of other available channels, based on data provided by a gateway client, and/or based on a combination of the preceding.

At block 208, the data transmission path is switched to the faster data channel.

The method may be repeated.

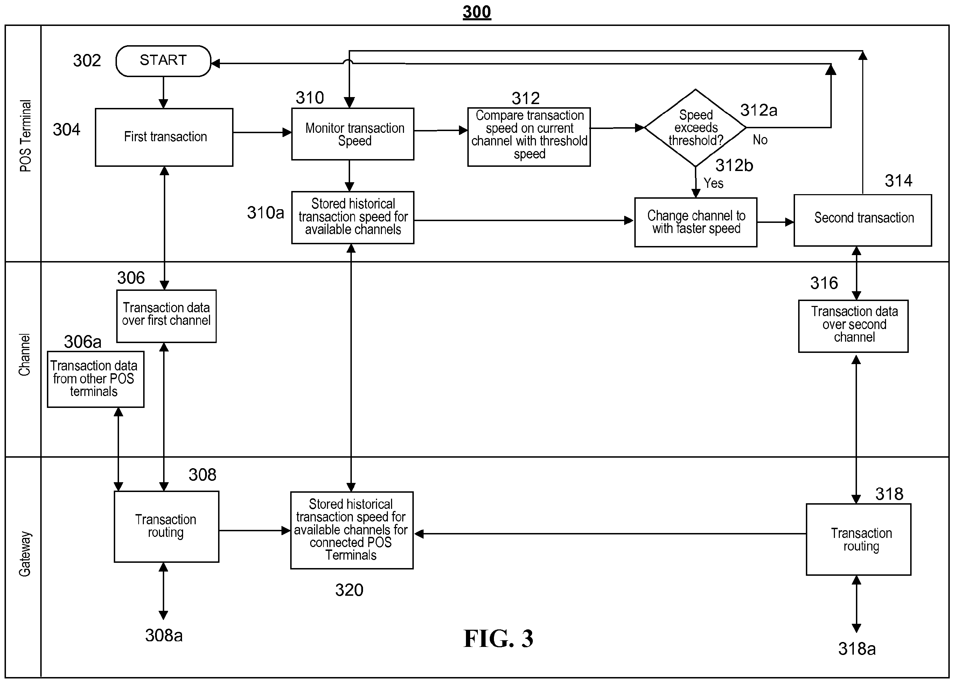

Figure 3 depicts a flow chart according to exemplary embodiments. The flow chart 300 may start at 302 at a POS terminal. At 304, a first transaction may be originated from the POS terminal. The POS terminal may using a first cellular network connection as the connection channel. At 306, the POS terminal transmits the transaction data to a data network over this first channel. The transaction data is transmitted to a gateway at block 308. The gateway performs further transaction routing to the appropriate payment processor or acquirer at block 308a. The transaction data is returned through the gateway over the first channel to the POS terminal to complete the transaction. As depicted at block 306a, the gateway may be communicatively coupled to more than one POS terminal. Thus, the gateway may perform transaction routing for a plurality of POS terminals.

The time of completion for the transaction may be determined and recorded by the POS terminal at block 310. The time of completion may be measured from receipt of the payment information from a customer (e.g., swiping or tapping of the payment method at the POS terminal) to until the authorization for the transaction is returned from the payment network. This channel transaction speed may be stored at block 310a.

At block 312, the channel transaction speed may be compared to a threshold number (i.e., a threshold time for completion of the transaction). If the transaction speed does not exceed the threshold speed, the flow may return to the start at 302 and process another transaction using the first channel at shown at block 312a.

If the transaction speed is in excess of the threshold, the POS terminal may evaluate historical transaction speed data from other available channels at block 312b. The POS terminal may transition to a second, faster channel and conduct the next transaction using this second faster channel at blocks 314 and 316. At blocks 318 and 318a, the second transaction may be routed by the gateway.

At block 320, the gateway may monitor and store the transaction speed for each transaction from each of its POS terminals over each channel. This transaction speed data may be provided to each POS terminal and used in the POS terminal's evaluation of transaction speed and identifying faster channels. According to exemplary embodiments, the transaction speed data provided by the gateway may be specific to the POS terminal to which it is being provided. The transaction speed data may be provided to the POS terminal over the same data channel used for transaction data. In some embodiments, a different data channel may be used to provide the transaction speed data. In some embodiments, each POS terminal may provide its transaction speed data to the gateway. The gateway may add this data to its data set of transaction speed data. The gateway may thus store and provide aggregated transaction speed information to each POS terminal.

It should be appreciated that the use of the reference labels "first" and "second" (e.g., "first transaction," "second transaction," etc.) are for illustrative purposes. The flow of Fig. 3 may be repeated for each transaction.

## Claims

1. **Point of sale terminal** (110,120,130), comprising:
a network interface unit that supports a first connection to a first cellular network (150,160,170) and a second connection to a second cellular network; and
a client (112,122,132) configured to monitor transaction speeds;
wherein:
the client is configured to monitor a first transaction speed for a first transaction over the first cellular network using the first connection;
the client (112, ...) is further configured to monitor a second transaction speed over the second cellular network using the second connection; and
the client (112, ...) is configured to cause the network interface unit to switch from the first connection to the first cellular network to the second connection to the second cellular network to conduct a second transaction when the first transaction speed is determined to be slower than a threshold transaction speed and the second transaction speed is faster than the first transaction speed.

2. Point of sale terminal (110, ...) of claim 1, wherein the client (112, ...) further comprises a model comprising historical transaction speed information for the first cellular network and the second cellular network.

3. Point of sale terminal (110, ...) of claim 2, wherein the historical transaction speed information comprises transaction speed information from past transactions conducted by the point of sale terminal (110, ...).

4. Point of sale terminal (110, ...) of claim 2 or 3, wherein the client (112, ...) receives transaction speed information from a second client located remote from the first client that is used in the model to determine the second transaction speed of the second cellular network.

5. Point of sale terminal (110, ...) of any one of claims 1 to 4, wherein the client (112, ...) is further configured to test the transaction speeds of the first cellular network and the second cellular network (150, ...) at periodic intervals using a test transaction.

6. **Method,** comprising:
monitoring (202) a speed of a first transaction over a first cellular network, by at least one computer processor, from a point of sale terminal (110,120,130);
comparing (204) the speed of the first transaction to a threshold transaction speed;
in response to the speed of the first transaction being slower than the threshold transaction speed, identifying (206) a second cellular network for conducting a second transaction, wherein a historical transaction speed of the second cellular network is faster than the speed of the first transaction over the first cellular network wherein the historical transaction speed is based on stored, historical transaction speed data comprising transaction speed data from previous transactions conducted at the point of sale terminal (110, ...) collected over a period of time; and
causing (208) the point of sale terminal (110, ...) to switch from using the first cellular network to the second cellular network wherein the switch is caused by an installed client (112,122,132) at the point of sale terminal (110, ...).

7. Method of claim 6, further comprising:
storing the speed of the first transaction in the stored, historical transaction speed data.

8. Method of claim 6 or 7, further comprising:
receiving a set of transaction speed data from a remote gateway (140), wherein the set of transaction speed data comprises transaction speed data from a plurality of point of sale terminals (110, ...).

9. Method of claim 8, further comprising:
using the received set of transaction speed data in the step of identifying (206) a second cellular network in addition to the stored, historical transaction speed data.

## Patentansprüche

1. Kassenterminal (110, 120, 130), umfassend:
eine Netzwerkschnittstelleneinheit, die eine erste Verbindung zu einem ersten zellularen Mobilfunknetz (150, 160, 170) und eine zweite Verbindung zu einem zweiten zellularen Mobilfunknetz unterstützt; und
einen Client (112, 122, 132), der konfiguriert ist, Transaktionsgeschwindigkeiten zu überwachen;
wobei:
der Client konfiguriert ist, eine erste Transaktionsgeschwindigkeit für eine erste Transaktion über das erste zellulare Mobilfunknetz bei Verwendung der ersten Verbindung zu überwachen;
der Client (112, ...) überdies konfiguriert ist, eine zweite Transaktionsgeschwindigkeit über das zweite zellulare Mobilfunknetz bei Verwendung der zweiten Verbindung zu überwachen; und
der Client (112, ...) konfiguriert ist, zu bewirken, dass die Netzwerkschnittstelleneinheit von der ersten Verbindung zu dem ersten zellularen Mobilfunknetz auf die zweite Verbindung zu dem zweiten zellularen Mobilfunknetz schaltet, um eine zweite Transaktion auszuführen, wenn bestimmt wird, dass die erste Transaktionsgeschwindigkeit langsamer ist als eine Transaktionsschwellwertgeschwindigkeit und die zweite Transaktionsgeschwindigkeit schneller ist als die erste Transaktionsgeschwindigkeit.

2. Kassenterminal (110, ...) nach Anspruch 1, wobei der Client (112, ...) überdies ein Modell umfasst, das historische Transaktionsgeschwindigkeitsdaten für das erste zellulare Mobilfunknetz und das zweite zellulare Mobilfunknetz enthält.

3. Kassenterminal (110, ...) nach Anspruch 2, wobei die historischen Transaktionsgeschwindigkeitsdaten Transaktionsgeschwindigkeitsdaten früherer Transaktionen enthalten, die das Kassenterminal (110, ...) ausgeführt hat.

4. Kassenterminal (110, ...) nach Anspruch 2 oder 3, wobei der Client (112, ...) Transaktionsgeschwindigkeitsdaten von einem zweiten Client empfängt, der ortsfern von dem ersten Client installiert ist, welcher in dem Modell verwendet wird, um die zweite Transaktionsgeschwindigkeit des zweiten zellularen Mobilfunknetzes zu bestimmen.

5. Kassenterminal (110, ...) nach einem der Ansprüche 1 bis 4, wobei der Client (112, ...) überdies konfiguriert ist, die Transaktionsgeschwindigkeiten des ersten zellularen Mobilfunknetzes und des zweiten zellularen Mobilfunknetzes (150, ...) in periodischen Zeitabständen mithilfe einer Prüftransaktion zu prüfen.

6. Verfahren, umfassend:
Überwachen (202) einer Geschwindigkeit einer ersten Transaktion über ein erstes zellulares Mobilfunknetz mittels mindestens eines Computerprozessors von einem Kassenterminal (110, 120, 130) aus;
Vergleichen (204) der Geschwindigkeit der ersten Transaktion mit einer Transaktionsschwellwertgeschwindigkeit;
wenn die Geschwindigkeit der ersten Transaktion langsamer ist als die Transaktionsschwellwertgeschwindigkeit, Identifizieren (206) eines zweiten zellularen Mobilfunknetzes zur Ausführung einer zweiten Transaktion, wobei eine historische Transaktionsgeschwindigkeit des zweiten zellularen Mobilfunknetzes schneller ist als die Geschwindigkeit der ersten Transaktion über das erste zellulare Mobilfunknetz, wobei die historische Transaktionsgeschwindigkeit auf gespeicherten, über einen bestimmten Zeitraum erfassten historischen Transaktionsgeschwindigkeitsdaten basiert, die Transaktionsgeschwindigkeitsdaten früherer Transaktionen enthalten, die an dem Kassenterminal (110, ...) ausgeführt wurden; und
bewirken (208), dass das Kassenterminal (110, ...) von der Benutzung des ersten zellularen Mobilfunknetzes auf das zweite zellulare Mobilfunknetz schaltet, wobei das Umschalten durch einen an dem Kassenterminal (110, ...) installierten Client (112, 122, 132) bewirkt wird.

7. Verfahren nach Anspruch 6, zudem umfassend:
Speichern der Geschwindigkeit der ersten Transaktion in den gespeicherten historischen Transaktionsgeschwindigkeitsdaten.

8. Verfahren nach Anspruch 6 oder 7, zudem umfassend:
Empfangen eines Transaktionsgeschwindigkeitsdatensatzes von einem Remote-Gateway (140), wobei der Transaktionsgeschwindigkeitsdatensatz Transaktionsgeschwindigkeitsdaten von einer Vielzahl von Kassenterminals (110, ...) enthält.

9. Verfahren nach Anspruch 8, zudem umfassend:
Verwenden des empfangenen Transaktionsgeschwindigkeitsdatensatzes in dem Schritt des Identifizierens (206) eines zweiten zellularen Mobilfunknetzes zusätzlich zu den gespeicherten historischen Transaktionsgeschwindigkeitsdaten.

## Revendications

1. Terminal de point de vente (110, 120, 130), comprenant:
une unité d'interface réseau qui supporte une première connexion à un premier réseau cellulaire (150, 160, 170) et une seconde connexion à un second réseau cellulaire; et
un client (112, 122, 132) configuré pour surveiller les vitesses de transaction;
dans lequel:
le client est configuré pour surveiller une première vitesse de transaction d'une première transaction sur le premier réseau cellulaire en utilisant la première connexion;
le client (112, ...) est en outre configuré pour surveiller une seconde vitesse de transaction sur le second réseau cellulaire en utilisant la seconde connexion; et
le client (112, ...) est configuré pour faire en sorte que l'unité d'interface réseau passe de la première connexion au premier réseau cellulaire à la seconde connexion au second réseau cellulaire pour effectuer une seconde transaction lorsque la première vitesse de transaction est déterminée comme étant plus lente qu'une vitesse de transaction seuil et que la seconde vitesse de transaction est plus rapide que la première vitesse de transaction.

2. Terminal de point de vente (110, ...) selon la revendication 1, dans lequel le client (112, ...) comprend en outre un modèle comprenant des informations historiques de vitesse de transaction pour le premier réseau cellulaire et le second réseau cellulaire.

3. Terminal de point de vente (110, ...) selon la revendication 2, dans lequel les informations historiques de vitesse de transaction comprennent des informations de vitesse de transaction provenant de transactions passées effectuées par le terminal de point de vente (110, ...) .

4. Terminal de point de vente (110, ...) selon la revendication 2 ou 3, dans lequel le client (112, ...) reçoit des informations de vitesse de transaction d'un second client situé à distance du premier client qui sont utilisées dans le modèle pour déterminer la seconde vitesse de transaction du second réseau cellulaire.

5. Terminal de point de vente (110, ...) selon l'une quelconque des revendications 1 à 4, dans lequel le client (112, ...) est en outre configuré pour tester les vitesses de transaction du premier réseau cellulaire et du second réseau cellulaire (150, ...) à intervalles périodiques en utilisant une transaction de test.

6. Procédé comprenant:
la surveillance (202) d'une vitesse d'une première transaction sur un premier réseau cellulaire, par au moins un processeur informatique, à partir d'un terminal de point de vente (110, 120, 130);
la comparaison (204) de la vitesse de la première transaction à une vitesse de transaction seuil;
en réponse au fait que la vitesse de la première transaction est plus lente que la vitesse de transaction seuil, l'identification (206) d'un second réseau cellulaire pour effectuer une seconde transaction, dans lequel une vitesse de transaction historique du second réseau cellulaire est plus rapide que la vitesse de la première transaction sur le premier réseau cellulaire, dans lequel la vitesse de transaction historique est basée sur des données de vitesse de transaction historique stockées comprenant des données de vitesse de transaction provenant de transactions précédentes effectuées au terminal de point de vente (110, ...) collectées sur une période de temps; et
le fait (208) que le terminal de point de vente (110, ...) est amené à passer de l'utilisation du premier réseau cellulaire au second réseau cellulaire, dans lequel le passage est provoqué par un client installé (112, 122, 132) au terminal de point de vente (110, ...).

7. Procédé selon la revendication 6, comprenant en outre:
le stockage de la vitesse de la première transaction dans les données historiques de vitesse de transaction stockées.

8. Procédé selon la revendication 6 ou 7, comprenant, en outre:
la réception d'un ensemble de données de vitesse de transaction à partir d'une passerelle distante (140), dans lequel l'ensemble de données de vitesse de transaction comprend des données de vitesse de transaction provenant d'une pluralité de terminaux de point de vente (110, ...) .

9. Procédé selon la revendication 8, comprenant en outre:
l'utilisation de l'ensemble reçu de données de vitesse de transaction dans l'étape d'identification (206) d'un second réseau cellulaire en plus des données de vitesse de transaction historiques stockées.
